(19) Europäisches Patentamt
European Patent Office
Office européen des brevets

(11) EP 3 674 911 A1

(12) EUROPEAN PATENT APPLICATION

(43) Date of publication:
01.07.2020 Bulletin 2020/27

(51) Int Cl.:
G06F 16/215 (2019.01)    G06F 16/23 (2019.01)

(21) Application number: 18248222.4

(22) Date of filing: 28.12.2018

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(71) Applicant: ATOS IT Solutions and Services Inc.
Purchase NY 10577 (US)

(72) Inventors:
• BOBKOV, Dmitriy
MAHWAH, NJ 07430 (US)
• CASEY, Christopher
MASON, OH 45040 (US)

(74) Representative: Lavoix
2, place d'Estienne d'Orves
75441 Paris Cedex 09 (FR)

(54) METHOD AND ELECTRONIC DEVICE FOR POPULATING A DATABASE FROM MULTIPLE DATA SOURCES, RELATED COMPUTER PROGRAM

(57)     This invention relates to a method for populating a database (12) from multiple data sources (14), the database (12) including at least one configuration item, each configuration item having at least one configuration item attribute.

The method is implemented by an electronic device (10) and comprises the following steps, for each configuration item attribute for which data is available in each source (14) of a group of data sources:
- acquiring, for each data source of the group, a respective value for each property among a set of distinct configuration item attribute properties;
- calculating, for each data source of the group, a respective attribute score according the property values for the set of configuration item attribute properties;
- selecting the data source with the best attribute score; and
- providing said configuration item attribute with the corresponding data from the selected data source.

FIG.1

## Description

### Field of the invention

The present invention relates to a method for populating a database from multiple data sources, the method being implemented by an electronic device.

The invention also relates to a computer program including software instructions which, when executed by a processor, implement such a populating method.

The invention also relates to an electronic device configured for populating a database from multiple data sources, the database including at least one configuration item, each configuration item having at least one configuration item attribute.

### Background of the invention

This invention concerns the field of the management of databases, such as a configuration management database (CMDB) or an asset management database (AMDB). More generally, this invention concerns any system that needs to have stored information related to remote end point configurations.

The invention relates to the reconciliation of multiple data sources to a database, whereas two or more data sources contain information about a same configuration item, also denoted CI, in particular a same configuration item attribute or relationship.

It is known using precedence for the reconciliation of multiple data sources to the database. The precedence is a priority in importance, order, or rank.

Accordingly, WO 2017/189750 A1 discloses a method and a system for updating a record stored in a configuration management database. The method comprises receiving data relating to a resource of the computer network from a first data source, the resource being associated with a record stored in a configuration management database (CMDB); determining that the first data source is authoritative for the resource based on a priority of the first data source relative to a priority of a second data source for the resource; and updating the record associated with the resource in the CMDB based on the data from the first data source.

EP 3 399 420 A1 discloses a method and a system for configuration management identification rule testing. A reconciliation rule tab can include a data source precedence section that can display information associated with a data source precedence corresponding to the reconciliation rule. A data source precedence can indicate whether a data source corresponding to the reconciliation rule is permitted to update the configuration management database.

However, such methods and systems for updating a record stored in a database can be further improved to select a data source which is more appropriate than the one with the greatest precedence, for updating a respective record in the database.

### Summary of the invention

An object of the invention is therefore to provide a method and a related electronic system for populating a database from multiple data sources, to select a more appropriate data source for updating a respective record in the database.

For this purpose, the subject matter of the invention is a method for populating a database from multiple data sources, the database including at least one configuration item, each configuration item having at least one configuration item attribute,

the method being implemented by an electronic device and comprising the following steps, for each configuration item attribute for which data is available in each source of a group of data sources:

- acquiring, for each data source of the group, a respective value for each property among a set of distinct configuration item attribute properties;
- calculating, for each data source of the group, a respective attribute score according the property values for the set of configuration item attribute properties;
- selecting the data source with the best attribute score; and
- providing said configuration item attribute with the corresponding data from the selected data source.

According to other advantageous aspects of the invention, the method comprises one or several of the following features, taken individually or according to any technically possible combination:

- during the calculating step and for each data source, each property value is multiplied by a respective property weight to obtain a weighted property value, the respective attribute score being then equal to the sum of the weighted property values;
- each property among the set of configuration item attribute properties is assigned a respective predefined non-zero property weight, the sum of the property weights for the set of configuration item attribute properties being equal to 1;
- the set of configuration item attribute properties includes at least two of the following three attribute properties: data age, data quality and data precedence;
- each configuration item attribute property is chosen from among the group consisting of: data age, data quality, data precedence, data precision, data content and data format;
- each acquired property value is further normalized and comprised between 0 and 1, the respective attribute score being then calculated according the normalized property values;

- if there is no existing data in the database for said configuration item attribute, then the group of data sources only includes inbound data sources;
- if the database contains existing data for said configuration item attribute, then the group of data sources includes an existing source formed by said existing data and at least one inbound data source;
- the existing data for said configuration item attribute is not updated if the age of said configuration item attribute is greater than or equal to a maximum age;
- the existing data for said configuration item attribute is updated only if the attribute score for the existing source is less than the attribute score for at least one inbound data source;
- the set of configuration item attribute properties is predefined for each configuration item attribute;
- the database is a configuration management database or an asset management database.

The subject matter of the invention is also a computer program including software instructions which, when executed by a processor, implement a method as defined above.

The subject matter of the invention is also an electronic device for populating a database from multiple data sources, the database including at least one configuration item, each configuration item having at least one configuration item attribute, the electronic device comprising:

- an acquisition module configured, for each configuration item attribute for which data is available in each source of a group of data sources, to acquire for each data source of the group a respective value for each property among a set of distinct configuration item attribute properties;
- a calculation module configured to calculate, for each data source of the group, a respective attribute score according the property values for the set of configuration item attribute properties;
- a selection module configured to select the data source with the best attribute score; and
- a providing module configured to provide said configuration item attribute with the corresponding data from the selected data source.

**Brief description of the drawings**

The invention will be better understood upon reading of the following description, which is given solely by way of example and with reference to the appended drawings, wherein:

- Figure 1 is a schematic representation of an electronic populating device adapted for populating a database from multiple data sources;
- Figure 2 is a general flowchart of a method, according to the invention, for populating the database from the data sources, the populating method being implemented by the electronic populating device of Figure 1;
- Figure 3 is a flowchart of an implementation example of this populating method in the case of updating a configuration item record in the database; and
- Figure 4 is a flowchart of an implementation example of the step of the flowchart of Figure 2, which consists of calculating, for each data source, a respective attribute score according to property values for a set of configuration item attribute properties.

**Detailed description of preferred embodiments**

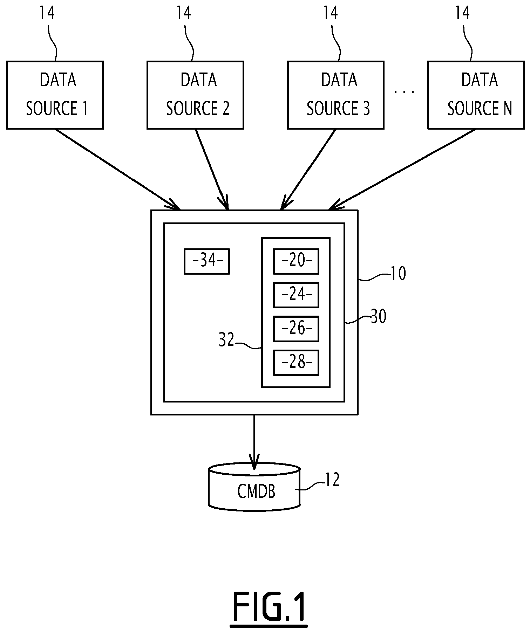

In Figure 1, an electronic populating device 10 is configured for populating a database 12 from multiple data sources 14.

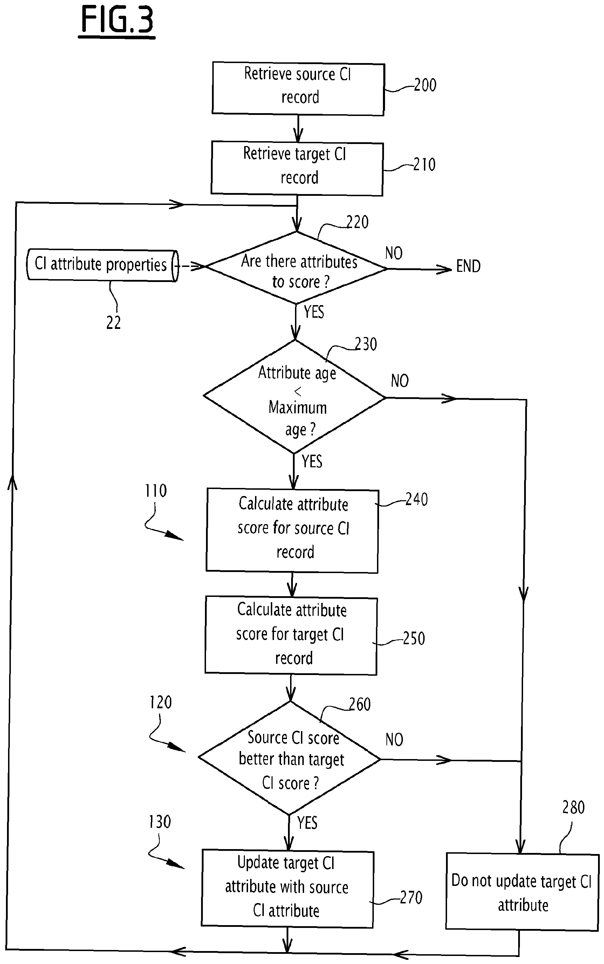

The electronic populating device 10 comprises an acquisition module 20 for acquiring, for each configuration item attribute for which data is available in each source 14 of a group of data sources and for each data source 14 of the group, a respective value for each property among a set of distinct configuration item attribute properties 22, depicted in Figure 3.

The electronic populating device 10 comprises a calculation module 24 for calculating an attribute score $S_i$ for each configuration item attribute and for each data source 14, a selection module 26 for selecting the data source 14 with the best attribute score and a providing module 28 for providing said configuration item attribute with the data from the selected data source 14.

In the example of Figure 1, the electronic populating device 10 includes a processing unit 30 formed for example of a memory 32 and of a processor 34 coupled to the memory 32.

In the example of Figure 1, the acquisition module 20, the calculation module 24, the selection module 26 and the providing module 28 are for example each realized, i.e. implemented, as a software executable by the processor 34. The memory 32 of the processing unit 30 is adapted to store an acquisition software for a respective value for each property among the set of distinct configuration item attribute properties 22, a calculation software for calculating an attribute score $S_i$ for each configuration item attribute and for each data source 14, a selection software for selecting the data source 14 with the best attribute score, and a providing software for providing said configuration item attribute with the data from the selected data source 14. The processor 34 of the processing unit 30 is then configured to execute the acquisition software, the calculation software, the selection software and the providing software.

As a variant not shown, the acquisition module 20, the calculation module 24, the selection module 26 and the providing module 28 are each in the form of a programmable logic component, such as a Field Programmable Gate Array or FPGA, or in the form of a dedicated integrated circuit, such as an Application Specific integrated Circuit or ASIC.

When the electronic populating device 10 is in the form of one or more software programs, i.e. in the form of a computer program, it is also capable of being recorded on a computer-readable medium, not shown. The computer-readable medium is, for example, a medium capable of storing electronic instructions and being coupled to a bus of a computer system. For example, the readable medium is an optical disk, a magneto-optical disk, a ROM memory, a RAM memory, any type of non-volatile memory (for example EPROM, EEPROM, FLASH, NVRAM), a magnetic card or an optical card. A computer program with software instructions is then stored on the readable medium.

The database 12 is for example a configuration management database, also denoted CMDB, or an asset management database, also denoted AMDB. The skilled person will understand that the database 12 is more generally a system that needs to have stored information related to remote end point configurations.

The database 12 includes at least one configuration item, also denoted CI, which is well-known in the technical field of databases. A configuration item is typically a component of an electronic system that can be identified as a self-contained unit, in particular for purposes of change control and identification.

Each configuration item has at least one configuration item attribute. The configuration item attribute is typically a physical attribute or a logical attribute of the respective configuration item. The physical attribute is for example a central processing unit (CPU) type, a number of cores per a multicore processor of a CPU, a CPU speed, a number of disks, etc. The logical attribute is for example an installed operating system (OS) version, an installed OS version patch level, a configuration item network address, etc. Further, the configuration item attribute is for example a configuration item identifier, a configuration item name, a configuration item abbreviation, a configuration item description, a configuration item ownership and a configuration item importance.

The group of data sources 14 includes several distinct data sources 14, such as the data sources 14 denoted DATA SOURCE 1 to DATA SOURCE N in the example of Figure 1, where N is an integer greater than or equal to 2. As known *per se,* each data source 14 is an application or a database that contains data needed to populate configuration items, configuration item attributes or relationships within the database 12. The relationship is a logical connection between configuration items.

Each data source 14 is typically a trusted data source. A trusted data source is a data source 14 that has been tested and vetted by data experts.

The skilled person will understand that if there is no existing data in the database 12 for said configuration item attribute, then the group of data sources 14 only includes inbound data sources.

Conversely, if the database 12 contains existing data for said configuration item attribute, then the group of data sources 14 includes an existing source formed by said existing data and at least one inbound data source.

The acquisition module 20 is configured, for each configuration item attribute for which data is available in each source 14 of a group of data sources, to acquire a respective value for each property among the set of distinct configuration item attribute properties 22 and for each data source 14 of the group.

Each configuration item attribute property is a dimension or vector of a configuration item attribute that is evaluable. Each configuration item attribute property is for example chosen from among the group consisting of: data age, data quality, data precedence, data precision, data content and data format.

The data age is the age of the data corresponding to the configuration item attribute in the respective data source 14. The data age therefore defines how old said value is from a reference time instant. The reference time instant usually coincides with the time instant when the property is acquired. As a variant, the reference time instant is a predefined time instant.

The data age is typically equal to a time difference, i.e. a time period, between the reference time instant and the time instant the data corresponding to the configuration item attribute was collected/updated, said time instant corresponding for example to a timestamp. Indeed, when source data is retrieved, the timestamp(s) associated with the data collections are retrieved as well.

The data quality is a property that is evaluated for example according to predefined levels of quality, generally further a data quality verification with predefined results or ranges of result. Accordingly, each quality level is then associated to a respective predefined verification result or range of result.

The skilled person will typically understand that if the result of the verification is chosen among 'correct' and 'incorrect', then the value of the data quality property is for example equal to 0 if the corresponding data is found incorrect and to 1 otherwise, i.e. if the data is considered as correct according to this data quality verification. If there is at least another possible verification result, such as partially correct, then the data quality property is comprised between 0 and 1, for example equal to 0.5 for 'partially correct'.

Data quality verification is typically implemented in a form of a regex or equivalent value verification. For example, if the configuration item attribute is an email address fulfilling a generic form, such as "FirstName.LastName@Company.net", then the data verification will typically check that only valid characters are used, that the character '@' is present, further that the character '.' is present to the right of the character '@' and further that the text to the left of the character '@' is longer than 3 characters and contains the character '.'. Such data verification therefore allows selection of a good value for the email address, i.e. a usable email, and filtering out non-routable email address values, like "root@systemname" and "admin@systemname.company.net". Similarly, an IP v4 address is checked to have four distinct parts, separated by the character '.', where each part has value ranging from 0-255.

The data precedence is a priority, or level of priority, in importance, order, or rank of the data corresponding to the configuration item attribute in the respective data source 14.

The data precision is the precision of the data corresponding to the configuration item attribute in the respective data source 14. The data precision is for example determined according to a number of digits of said data, and the higher the number of digits is the more precise the data is. As a variant, the data precision is determined according to a level of precision of an information contained in the data. For example, if the information contained in the data relates to a version of an operating system, the data "Generic OS" will be considered as less precise than "Windows™", which is itself less precise than "Windows™ Server 2003", which is itself less precise than "Windows™ Server 2003 R2", which is itself less precise than "Windows™ Server 2003 R2 Enterprise", which is finally itself less precise "Windows™ Server 2003 R2 Enterprise x64".

The data content allows for distinguishing data from different data sources 14 based on a known formatting of the data. For example, the data content allows to choose between a BIOS and contract serial number based on known formatting of both.

The data format is a property that evaluates, or quantifies, each possible format of the data among a predefined list of data formats. The data format therefore allows for the selection of a data among data from different data sources 14 and corresponding to the same configuration item attribute when these data are in different formats. In other words, one format is preferred over another, for example the decimal format is preferred over the binary format or the hexadecimal format.

The set of distinct configuration item attribute properties 22 includes any number of configuration item attribute properties.

The set of configuration item attribute properties 22 includes preferably at least two of the following three attribute properties: data age, data quality and data precedence.

The set of configuration item attribute properties 22 is typically predefined for each configuration item attribute.

In optional addition, each acquired property value is further normalized and comprised between 0 and 1, the respective attribute score $S_i$ being then calculated according the normalized property values. According to this optional addition, a maximum value is for example predefined or measured for each property, and the normalized property value is then equal to the acquired property value divided by said maximum value.

When the considered property is the data age, the value of this property is equal to the age of the data, i.e. the spent duration since the last update of the data, divided by the maximum age. The maximum age is preferably a predetermined value, generally expressed with a number of days. The maximum age is for example 14 days. Further, the data age granularity is for example determined according to the frequency of data acquisition and/or to the frequency of procession. An example implementation is a daily processing with a daily acquisition of data from remote data sources 14. In this example, the age of the data is expressed in days and the value of the data age property is then equal to this age in days divided by 14.

Data in the data sources 14 is generally updated on a frequency from between near real-time (for example, list of the computers from the active directory) to once per 1-2 weeks (for example, discovery systems that execute scheduled scans).

The calculation module 24 is configured to calculate, for each data source 14 of the group, the respective attribute score $S_i$ according the property values $A_{i,j}$ for the set of configuration item attribute properties 22. The property values $A_{i,j}$ is the acquired property value in the absence of normalization or the normalized property value according to the optional addition wherein the acquired property value is further normalized.

The calculation module 24 is for example configured to calculate, for each data source 14 of the group, the respective attribute score $S_i$ according to the following equation:

$$S_i = F(A_{i,j}) \qquad (1)$$

where i is an index of the data source, i being an integer, for example comprised between 1 and N, N being the number of data sources 14 in the group of data sources, N≥2,

$S_i$ is the attribute score for the data source 14 with index i,

F is a mathematical function, preferably a monotonic function, such as a linear function,

j is an index of the property, j being an integer, for example comprised between 1 and P, P being the number of properties in the set of configuration item attribute properties 22, P≥2, and

$A_{i,j}$ is the property value of the data corresponding to the given configuration item attribute the data source 14 with index i and for the property with index j.

In optional addition, the calculation module 24 is further configured, for each data source 14, to multiply each property value $A_{i,j}$ by a respective property weight $w_j$ to obtain a weighted property value $w_j*A_{i,j}$, the respective attribute score $S_i$ being then equal to the sum of the weighted property values $w_j*A_{i,j}$.

According to this optional addition, the calculation module 24 is for example configured to calculate, for each data source 14 of the group, the respective attribute score $S_i$ according to the following equation:

$$S_i = \sum_{j=1}^{P} w_j . A_{i,j} \qquad (2)$$

where i is the index of the data source,
$S_i$ is the attribute score for the data source 14 with index i,
j is the index of the property,
$w_j$ is the weight for the property with index j, and
$A_{i,j}$ is the property value of the data corresponding to the given configuration item attribute the data source 14 with index i and for the property with index j.

In further optional addition, each property among the set of configuration item attribute properties 22 is assigned a respective predefined non-zero property weight $w_j$, the sum of the property weights $w_j$ for the set of configuration item attribute properties 22 being equal to 1.

In other words, according to this further optional addition, the following equation is verified:

$$\sum_{j=1}^{P} w_j = 1 \qquad (3)$$

According to this further optional addition, and assuming the set of configuration item attribute properties 22 is a set of three properties consisting of data age, data quality and data precedence, the weights associated to data quality, data age and respectively data precedence are for example equal to 0.5, 0.3 and respectively 0.2.

The selection module 26 is configured to select the data source 14 with the best attribute score. The skilled person will therefore understand that the selection module 26 is for example configured to select the data source 14 with the highest attribute score when the higher the value of the property is the better the data is considered. Conversely, if the lower the value of the property is the better the data is considered, then the selection module 26 is configured to select the data source 14 with the lowest attribute score.

The providing module 28 is configured to provide said configuration item attribute with the corresponding data from the selected data source 14.

If the group of data sources 14 includes the existing source and at least one inbound data source, the providing module 28 is accordingly configured to update the existing data for said configuration item attribute only if the attribute score for at least one inbound data source is better than the attribute score for the existing source.

In optional addition, if the group of data sources 14 includes the existing source and at least one inbound data source, the providing module 28 is further configured to not update the existing data for said configuration item attribute if the age of said configuration item attribute is greater than or equal to a maximum age, which is preferably predetermined.

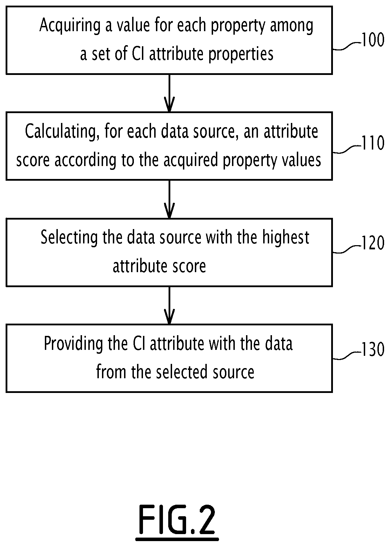

The operation of the electronic populating device 10 according to the invention will now be explained in view of Figures 2 to 4 representing flowcharts of a method, according to the invention, for populating a database 12 from multiple data sources 14.

The method is, for example, applied sequentially to each configuration item attribute for which data is available in the group of data sources 14 and, before an initial step 100 of Figure 2, a new configuration item attribute is selected by the electronic populating device 10 for carrying out the populating method to said selected configuration item attribute.

Then, in initial step 100, the electronic populating device 10 acquires, via its acquisition module 20, for each data source 14 of the group, a respective value for each property among the set of distinct configuration item attribute properties 22.

The electronic populating device 10 further calculates, during next step 110 and via its calculation module 24, for each data source 14 of the group, a respective attribute score $S_i$ according the property values $A_{i,j}$ for the set of configuration item attribute properties 22.

In the next step 120, the electronic populating device 10 selects, via its selection module 26, the data source with the best attribute score.

Lastly, the electronic populating device 10 provides, during next step 130 and via its providing module 28, said configuration item attribute with the corresponding data from the selected data source.

At the end of the step 130, the electronic populating device 10 selects a next configuration item attribute and returns to step 100 for carrying out the populating method to this next configuration item attribute.

Figure 3 represents a flowchart of an implementation example of this populating method in the case of updating a configuration item record in the database 12.

According to this example, in step 200, a new configuration item record is retrieved for at least one inbound data source and for at least one configuration item attribute.

Then, in next step 210, the configuration item record corresponding to this at least one configuration item attribute is retrieved in the existing data source.

The electronic populating device 10 further tests, during next step 220, if there are attribute(s) to be evaluated, i.e. to score. If there is no attribute to be evaluated, then the methods ends.

The skilled person will therefore observe that the source and target configuration item records would usually contain more configuration item attributes than those configured to be evaluated. This step 220 is therefore to check whether among of all attributes retrieved there are any that are still subject to be evaluated.

If there is at least one configuration item attribute left to score, then the electronic populating device 10 verifies, during next step 230, that the age of the data for the considered configuration item attribute is below the maximum age.

The skilled person will therefore understand that this step 230 aims verifying that the data for the considered configuration item attribute is not stale data and is still trust worthy.

If so, the electronic populating device 10 then calculates, during next step 240 and via its calculation module 24, the respective attribute score $S_i$ for the considered configuration item attribute and for each inbound data source.

During next step 250, the electronic populating device 10 similarly calculates, via its calculation module 24, the respective attribute score $S_i$ for the considered configuration item attribute and for the existing data source.

After having calculated the respective attribute score $S_i$ for the considered configuration item attribute and for all the data sources 14 of the group, the electronic populating device 10 determines, during next step 260 and via its selection module 26, if there is at least one inbound data source for which the respective attribute score $S_i$ is better than the one for the existing data source.

If so, the electronic populating device 10 updates, during next step 270 and via its providing module 28, the existing data for said configuration item attribute, i.e. the target configuration item attribute, with the data from the inbound data source with the best attribute score for said configuration item attribute.

Otherwise, if the attribute score for the existing data source is better than the one(s) for the inbound data source(s), then the electronic populating device 10 do not update, during next step 280 and via its providing module 28, the existing data for said configuration item attribute, i.e. do not update the target configuration item attribute.

After the step 230, if the age of the data for the considered configuration item attribute is greater than the predetermined maximum age, i.e. beyond this maximum age, the electronic populating device 10 goes directly to step 280 and do not update the target configuration item attribute, since this data is considered to be stale data and not trust worthy.

After the step 270 or the step 280, the electronic populating device 10 returns to step 220 for determining if there are still attribute(s) to be evaluated.

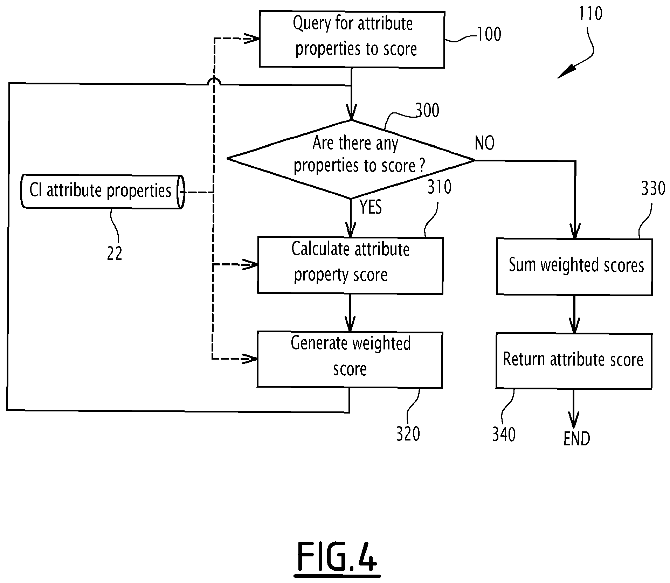

Figure 4 represents a flowchart of an implementation example of the step 110 of calculating, for each data source 14, a respective attribute score $S_i$ according property values $A_{i,j}$ for a set of configuration item attribute properties 22.

In Figure 4, during the initial step 100, the electronic populating device 10 acquires, via its acquisition module 20, for each data source 14 of the group, a respective value for each property among the set of distinct configuration item attribute properties 22. In other words, during this initial step 100, the electronic populating device 10 queries for attribute properties $A_{i,j}$ in order to score the corresponding data source 14 during the calculating step 110.

Then, the calculating step 110, comprises an initial sub-step 300 to check if there is at least one property to be taken into account, i.e. to score.

At the beginning of the calculating step 110, since the set of configuration item attribute properties 22 includes, according to the invention, several properties for the configuration item attribute to score, then the test of sub-step 300 is necessarily positive.

When there is at least one property to be taken into account, the electronic populating device 10 then determines, during next sub-step 310, the attribute property values $A_{i,j}$ for the considered property. During this sub-step 310, the acquired property value is typically and optionally normalized. Therefore, the calculation module 24 for example divides the acquired property value by the maximum value for the considered property, to obtain the attribute property value $A_{i,j}$.

Further optionally, the calculation module 24 then generates, during next sub-step 320, the weighted score $w_j{*}A_{i,j}$ for the considered property, i.e. multiplies the attribute property values $A_{i,j}$ by the weight $w_j$ for the considered property, before returning to sub-step 300 for handling the next property.

When all properties of the set of configuration item attribute properties 22 have been scored, the test of sub-step 300 becomes negative and the calculation module 24 then goes to sub-step 330 for summing the weighted scores $w_j{*}A_{i,j}$ that have been determined for all the properties of the set 22. In other words, the calculation module 24 calculates the attribute score $S_i$ for the corresponding data source 14 according to Equation (2).

The calculation module 24 finally returns, during last sub-step 340, the calculated score $S_i$ for the corresponding data source 14 to the selection module 26, in view of the selecting step 120.

Thus, the electronic populating device 10 and the populating method according to the invention allows calculating, for each data source 14, a respective attribute score $S_i$ according the property values $A_{i,j}$ for the set 22 of several configuration item attribute properties, and selecting the data source with the best attribute score, after having taken into account these several attribute properties.

Therefore, the selection of the data source 14 for populating the database 12 is more efficient than with the prior art populating methods which are limited to simple data precedence.

Further, any special handling condition of a configuration item attribute is implementable as an additional configuration item attribute property to be evaluated, i.e. to be included into the set 22 of several configuration item attribute properties.

In optional addition, when the set of configuration item attribute properties 22 includes at least two of the following three attribute properties: data age, data quality and data precedence, the age and/or the quality of data contribute to the decision to populate the database 12, for example to update or not the database 12 with a configuration item attribute of an inbound data source.

When the data age is taken into account, it allows populating the database 12 with the newest and most reliable data.

When the data quality is one of the properties of the set 22, it permits eliminating invalid or poor quality configuration item attribute data from the database 12.

In addition, when the data precision is included in the set of configuration item attribute properties 22, it enables selecting a more precise value for populating the database 12.

When the data content is one of the properties of the set 22, it allows selecting the most appropriate based on content of the attribute itself.

Further, when the data format is included in the set of properties 22, it permits selecting the data source 14 which contains the most appropriate formatting for populating the database 12.

Thus, the electronic populating device 10 and the populating method according to the invention allow selecting a more appropriate data source 14 for updating a respective record in the database 12 than the prior art methods.

**Claims**

1. A method for populating a database (12) from multiple data sources (14), the database (12) including at least one configuration item (CI), each configuration item (CI) having at least one configuration item attribute,
   the method being implemented by an electronic device (10) and comprising the following steps, for each configuration item attribute for which data is available in each source (14) of a group of data sources:

   - acquiring (100), for each data source of the group, a respective value for each property among a set (22) of distinct configuration item attribute properties;
   - calculating (110), for each data source of the group, a respective attribute score ($S_i$) according the property values ($A_{i,j}$) for the set of configuration item attribute properties (22);
   - selecting (120) the data source with the best attribute score; and
   - providing (130) said configuration item attribute with the corresponding data from the selected data source.

2. The method according to claim 1, wherein, during the calculating step (110) and for each data source, each property value ($A_{i,j}$) is multiplied by a respective property weight ($w_j$) to obtain a weighted property value ($w_j*A_{i,j}$), the respective attribute score ($S_i$) being then equal to the sum of the weighted property values ($w_j*A_{i,j}$).

3. The method according to claim 2, wherein each property among the set of configuration item attribute properties (22) is assigned a respective predefined non-zero property weight ($w_j$), the sum of the property weights for the set of configuration item attribute properties (22) being equal to 1.

4. The method according to any one of the preceding claims, wherein the set of configuration item attribute properties (22) includes at least two of the following three attribute properties: data age, data quality and data precedence.

5. The method according to any one of the preceding claims, wherein each configuration item attribute property is chosen from among the group consisting of: data age, data quality, data precedence, data precision, data content and data format.

6. The method according to any one of the preceding claims, wherein each acquired property value is further normalized and comprised between 0 and 1, the respective attribute score ($S_i$) being then calculated according the normalized property values.

7. The method according to any one of the preceding claims, wherein if there is no existing data in the database (12) for said configuration item attribute, then the group of data sources (14) only includes inbound data sources.

8. The method according to any one of claims 1 to 6, wherein if the database (12) contains existing data for said configuration item attribute, then the group of data sources (14) includes an existing source formed by said existing data and at least one inbound data source.

9. The method according to claim 8, wherein the existing data for said configuration item attribute is not updated if the age of said configuration item attribute is greater than or equal to a maximum age.

10. The method according to claim 8 or 9, wherein the existing data for said configuration item attribute is updated only if the attribute score for the existing source is less than the attribute score for at least one inbound data source.

11. The method according to any one of the preceding claims, wherein the set of configuration item attribute properties (22) is predefined for each configuration item attribute.

**12.** The method according to any one of the preceding claims, wherein the database (12) is a configuration management database (CMDB) or an asset management database (AMDB).

**13.** Computer program including software instructions which, when executed by a processor, implement a method according to any one of the preceding claims.

**14.** An electronic device (10) configured for populating a database (12) from multiple data sources (14), the database (12) including at least one configuration item (CI), each configuration item (CI) having at least one configuration item attribute, the electronic device (10) comprising:

- an acquisition module (20) configured, for each configuration item attribute for which data is available in each source of a group of data sources (14), to acquire for each data source (14) of the group a respective value for each property among a set of distinct configuration item attribute properties (22);
- a calculation module (24) configured to calculate, for each data source of the group, a respective attribute score ($S_i$) according the property values ($A_{i,j}$) for the set of configuration item attribute properties (22);
- a selection module (26) configured to select the data source with the best attribute score; and
- a providing module (28) configured to provide said configuration item attribute with the corresponding data from the selected data source.

## FIG.1

Acquiring a value for each property among
a set of CI attribute properties — 100

↓

Calculating, for each data source, an attribute
score according to the acquired property values — 110

↓

Selecting the data source with the highest
attribute score — 120

↓

Providing the CI attribute with the data
from the selected source — 130

## FIG.2

# FIG.3

Retrieve source CI record —200

Retrieve target CI record —210

CI attribute properties — 22

Are there attributes to score ? —220 → NO → END

YES

Attribute age < Maximum age ? —230 → NO

YES

110 — Calculate attribute score for source CI record —240

Calculate attribute score for target CI record —250

120 — Source CI score better than target CI score ? —260 → NO

YES

130 — Update target CI attribute with source CI attribute —270

280 — Do not update target CI attribute

Query for attribute
properties to score ⸺100

110

Are there any
properties to score ? — 300

NO

CI attribute properties

22

YES 310

Calculate attribute
property score

Sum weighted scores 330

Generate weighted
score

Return attribute score

320 340 END

# FIG.4

Europäisches
Patentamt

European
Patent Office

Office européen
des brevets

## EUROPEAN SEARCH REPORT

Application Number

EP 18 24 8222

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2017/308601 A1 (MASSARENTI DAVIDE [US] ET AL) 26 October 2017 (2017-10-26) * abstract * * * paragraph [0018] - paragraph [0019] * * paragraph [0040] - paragraph [0043] * * paragraph [0062] - paragraph [0066] * ----- | 1-14 | INV. G06F16/215 G06F16/23 |
| X | US 2009/319932 A1 (ROBINSON DAVID G [US] ET AL) 24 December 2009 (2009-12-24) * abstract * * * paragraph [0002] - paragraph [0006] * * paragraph [0010] * * paragraph [0022] * * paragraph [0024] - paragraph [0025] * * paragraph [0027] - paragraph [0029] * ----- | 1-14 | |
| X | US 2011/238637 A1 (MOROZOV VITALY [US] ET AL) 29 September 2011 (2011-09-29) * abstract * * * paragraph [0011] * * paragraph [0026] - paragraph [0032] * ----- | 1-14 | |
| | | | TECHNICAL FIELDS SEARCHED (IPC) G06F |

The present search report has been drawn up for all claims

| Place of search | Date of completion of the search | Examiner |
|---|---|---|
| The Hague | 28 February 2019 | de Castro Palomares |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

**ANNEX TO THE EUROPEAN SEARCH REPORT
ON EUROPEAN PATENT APPLICATION NO.**

EP 18 24 8222

This annex lists the patent family members relating to the patent documents cited in  the above-mentioned European search report.
The members are as contained in the European Patent Office EDP file on
The European Patent Office is in no way liable for these particulars which are merely given for the purpose of information.

28-02-2019

| Patent document cited in search report | | Publication date | Patent family member(s) | | Publication date |
|---|---|---|---|---|---|
| US 2017308601 | A1 | 26-10-2017 | AU | 2017257982 A1 | 01-11-2018 |
| | | | CA | 3021555 A1 | 02-11-2017 |
| | | | EP | 3449365 A1 | 06-03-2019 |
| | | | US | 2017308601 A1 | 26-10-2017 |
| | | | WO | 2017189750 A1 | 02-11-2017 |
| US 2009319932 | A1 | 24-12-2009 | NONE | | |
| US 2011238637 | A1 | 29-09-2011 | US | 2011238637 A1 | 29-09-2011 |
| | | | US | 2014195504 A1 | 10-07-2014 |
| | | | US | 2016196307 A1 | 07-07-2016 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2017189750 A1

- EP 3399420 A1